# EUROPÄISCHE PATENTSCHRIFT

(11) **EP 1 384 016 B1**
(45) Veröffentlichungstag und Bekanntmachung des Hinweises auf die Patenterteilung: **18.04.2007**
(21) Anmeldenummer: 02732538.0
(22) Anmeldetag: 28.03.2002
(51) Int. Cl.: F16H 1/00

(54) **WALZKÖRPERGEWINDETRIEB UND ANTRIEBSEINRICHTUNG EINES KRAFTFAHRZEUG-ACHSLENKMODULS**
THREADED MECHANISM WITH ROLLING BODIES AND DRIVE DEVICE OF AN AUTOMOTIVE AXLE GUIDE MODULE
TRANSMISSION A VIS ET A CORPS DE ROULEMENT ET SYSTEME D'ENTRAINEMENT D'UN MODULE BIELLE DE LIAISON D'ESSIEU D'UN VEHICULE AUTOMOBILE

(30) Priorität: 28.03.2001 DE 10115316
(43) Veröffentlichungstag der Anmeldung: 28.01.2004
(73) Patentinhaber: Continental Teves AG & Co. oHG, 60488 Frankfurt (DE); Schaeffler KG, 91074 Herzogenaurach (DE)
(72) Erfinder: NELL, Joachim, 63452 Hanau (DE); LINKENBACH, Steffen, 65760 Eschborn (DE); HOFFMANN, Oliver, 60486 Frankfurt (DE); SCHACK, Peter, 63500 Seligenstadt (DE); JUNGBECKER, Johann, 55576 Badenheim (DE); RATH, Thomas, 63128 Dietzenbach (DE); BAYER, Ronald, 63165 Mühlheim/Main (DE); NEUWIRTH, Ernst, 91074 Herzogenaurach (DE); KRAUS, Manfred, 91074 Herzogenaurach (DE); OSTERLÄNGER, Jürgen, 91448 Emskirchen (DE)
(86) Internationale Anmeldenummer: PCT/EP2002/003536
(87) Internationale Veröffentlichungsnummer: WO 2002/077487

(56) Entgegenhaltungen:
- EP-A- 0 930 214
- DE-A- 10 016 197
- US-A- 4 773 497
- US-A- 5 083 626
- PATENT ABSTRACTS OF JAPAN vol. 2000, no. 13, 5. Februar 2001 (2001-02-05) & JP 2000 297855 A (NTN CORP), 24. Oktober 2000 (2000-10-24)

## Beschreibung

Die Erfindung betrifft einen Wälzkörpergewindetrieb, der eine Spindelstange, eine diese zumindest teilweise umgebende Spindelmutter und eine Anzahl dazwischen angeordneter Wälz-oder Rollkörpern aufweist, und eine Antriebseinrichtung eines Kraftfahrzeug-Achslenkmoduls mit einem derartigen Mälzkörpergewindetrieb, entsprechend dem Oberbegriff des Anspruchs 1.

Bei unterschiedlichen Anwendungen können bei Wälzkörpergewindetrieben Radialkräfte auftreten. So können z.B. in Lenkgetrieben für Fahrzeuge auf die Lenkstange durch die wegabhängige Schrägstellung der mit den Rädern gekoppelten Spurstangen Radialkräfte wirken, die Reibkräfte in den Lagerstellen und eine Verbiegung der gesamten Lenkstange erzeugen, wodurch Kräfte auf die als Antrieb verwendeten Gewindetriebe wirken.

Wälzkörpergewindetriebe sind aus der gattungsgemässen DE 100 16 197 A1, der US-A-5 083 626 und der EP-A-0 930 214 bekannt. Alle Gewindetriebe sehen eine Spindelmutter vor, die mittels Schrägkugellagern gelagert ist, die radiale und axiale Kräfte aufnehmen kann. Diese Lager sind sehr starr und vertragen keine Schrägstellungen.

Aufgabe der Erfindung ist es, einen Wälzkörpergewindetrieb und eine Antriebseinrichtung eines Kraftfahrzeug-Achslenkmoduls so auszubilden, dass eine gleichmäßige Belastung der Lagerung einer Spindelmutter erfolgt.

Diese Aufgabe wird erfindungsgemäß dadurch gelöst, dass bei einem Wälzkörpergewindetrieb, der eine Spindelstange, eine diese zumindest teilweise umgebende Spindelmutter und eine Anzahl dazwischen angeordneter Wälz- oder Rollkörpern aufweist, für die Spindelmutter eine axiale und radiale Lagerung vorgesehen ist, die sowohl für Kippbewegungen der Spindelmutter um ihre Längsachse, als auch für Radialbewegungen der Spindelmutter quer zu ihrer Längsachse ausgebildet ist.

Wesentlich für den erfindungsgemäßen Wälzkörpergewindetrieb ist es demnach, dass für eine unter Zwischenschaltung von Wälzkörpern mit der Spindelstange wirkverbundene Spindelmutter eine axiale und radiale Lagerung vorgesehen ist, wobei diese Lagerung Kippbewegungen der Spindelmutter um ihre Längsachse und Radialbewegungen der Spindelmutter quer zu ihrer Längsachse ermöglicht. Mit dem erfindungsgemäßen Wälzkörpergewindetrieb kann vorteilhaft eine gleichmäßige Belastung der Lagerung erzielt werden. Das bedeutet, es wird eine definierte Torsionsweichheit gewährleistet und gleichzeitig ein bestimmtes radiales Spiel zugelassen.

Gemäß einer bevorzugten Ausführungsform der Erfindung ist es vorgesehen, dass mindestens ein Axialwälzlager vorgesehen ist zur axialen Lagerung der Spindelmutter, die einen Radialflansch aufweist, dessen Stirnseiten zur Anlage für das Axialwälzlager ausgebildet sind. Damit kann vorteilhaft eine gleichmäßige Belastung der Lagerung im Axiallager erzielt werden.

Gemäß einer bevorzugten Ausführungsform der Erfindung ist es vorgesehen, dass die axiale Lagerung an einem Gehäuse vorgesehen ist, das an einander zugewandten Stirnseiten zur Anlage des Axialwälzlagers ausgebildet ist.

Gemäß einer bevorzugten Ausführungsform der Erfindung ist es vorgesehen, dass das Gehäuse zwei quer zur Drehachse der Gewindespindel geteilte Gehäusehälften aufweist und je ein Axialwälzlager zwischen dem Radialflansch und jeder Gehäusehälfte angeordnet ist.

Gemäß einer bevorzugten Ausführungsform der Erfindung ist es vorgesehen, dass die beiden Gehäusehälften die Axiallager spielfrei aufnehmen.

Gemäß einer bevorzugten Ausführungsform der Erfindung ist es vorgesehen, dass Borde des Gehäuses an ihren einander zugewandten Stirnseiten zur Anlage von Axiallagerringen der Axialwälzlager ausgebildet sind.

Gemäß einer bevorzugten Ausführungsform der Erfindung ist es vorgesehen, dass die einander zugewandten Stirnseiten der Borde hervorstehende, konvex geformte Anlagen für die Axiallagerringe der Axialwälzlager aufweisen. Mittels dieser Anlagen kann eine definierte Torsionsweichheit gewährleistet werden, indem diese ein definiertes Verkippen der Axiallagerringe und damit der Spindelmutter erlauben.

Gemäß einer bevorzugten Ausführungsform der Erfindung ist es vorgesehen, dass die Borde elastisch auslenkbar sind. Vorzugsweise sind die Borde und auch der Radialflansch elastisch auslenkbar.

Gemäß einer bevorzugten Ausführungsform der Erfindung ist es vorgesehen, dass ein Radialwälzlager angeordnet ist zur radialen Lagerung der Spindelmutter.

Gemäß einer bevorzugten Ausführungsform der Erfindung ist es vorgesehen, dass für das Radialwälzlager ein Lagersitz vorgesehen ist, der am Gehäuse ausgebildet ist und zwischen dem und dem Radialwälzlager ein Radialspiel vorgesehen ist.

Gemäß einer bevorzugten Ausführungsform der Erfindung ist es vorgesehen, dass zwischen dem Gehäuse und dem Radialwälzlager ein Dämpfungselement zur Dämpfung von Radialbewegungen der Spindelmutter angeordnet ist.

Gemäß einer bevorzugten Ausführungsform der Erfindung ist es vorgesehen, dass der Lagersitz für das Radialwälzlager hohlzylindrisch ausgebildet ist und eine umlaufende Nut aufweist, in der ein gummielastisches, ringförmig geschlossenes Dämpfungselement angeordnet ist, das radial einwärts aus der Nut zumindest teilweise hervorsteht.

Gemäß einer bevorzugten Ausführungsform der Erfindung ist es vorgesehen, dass die Wälzkörper des Wälzkörpergewindetriebs kugelförmig ausgebildet sind.

Die Aufgabe wird ebenso durch eine Antriebseinrichtung eines Kraftfahrzeug-Achslenkmoduls mit einem Wälzkörpergewindetrieb nach der Erfindung gelöst, die dadurch gekennzeichnet ist, dass die Antriebseinrichtung einen Drehantrieb aufweist, der über eine biegeweiche Drehmomentkupplung antriebsmäßig mit der Spindelmutter verbunden ist.

Gemäß einer bevorzugten Ausführungsform der Erfindung ist es vorgesehen, dass die Gewindespindel des Wälzkörpergewindetrieb in axialer Richtung hinter einem beweglichen Bauelement des Kraftfahrzeug-Achslenkmoduls angeordnet ist, das mit einem von einem Fahrer betätigbaren Lenkrad verbunden oder verbindbar ist und durch Verlagerung ein Verschwenken von lenkbaren Fahrzeugrädern bewirkt.

Gemäß einer bevorzugten Ausführungsform der Erfindung ist es vorgesehen, dass das bewegliche Bauelement des Kraftfahrzeug-Achslenkmoduls eine Zahnstange ist, mit der die Gewindespindel fest verbunden.

Der erfindungsgemäße Wälzkörpergewindetrieb wird nun beispielhaft anhand von 6 Abbildungen (Fig.1 bis Fig.6) näher erläutert.

Es zeigen:
Fig.1 einen Wälzkörpergewindetrieb entlang der Längsachse mit Schnitt durch die Spindelmutter,
Fig.2 einen Schnitt des in Fig.1 gezeigten Wälzkörpergewindetriebs quer zur Längsachse im Bereich der Spindelmutter,
Fig.3 eine perspektivische Darstellung des in Fig. 1 gezeigten Wälzkörpergewindetriebs,
Fig.4 einen Ausschnitt des in Fig.1 gezeigten Wälzkörpergewindetriebs mit Schnitt durch die Spindelmutter entlang der Längsachse des Wälzkörpergewindetriebs,
Fig.5 einen Ausschnitt aus der in Fig.4 gezeigten Spindelmutter in vergrößerter Darstellung,
Fig.6 eine schematische Darstellung der Bewegungsmöglichkeiten des Wälzkörpertriebs.

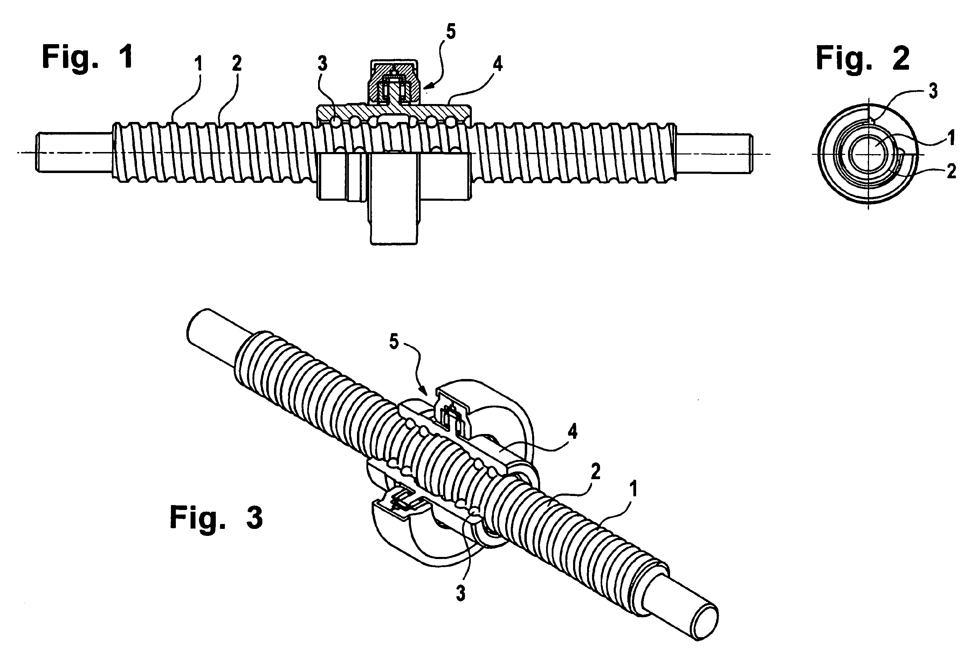

Der in der Fig.1, Fig.2 und Fig.3 gezeigte Wälzkörpergewindetrieb ist eine eigenständige funktionelle Baugruppe, bei der eine Spindelstange (1) beispielsweise ein Teil der Zahnstange eines Kraftfahrzeug-Achslenkmoduls sein könnte. Der Wälzkörpergewindetrieb besitzt ein Kugelgewinde (2) und kugelförmige Wälz-oder Rollkörper (3) zwischen der Spindelstange (1) und einer Spindelmutter (4). Er dient hier als Rot/Trans-Getriebe einer der Antriebseinrichtung des Achslenkmoduls. Der Wälzkörpergewindetrieb ist durch eine entsprechende Lagerung (5) der Spindelmutter (4) so ausgeführt, dass sowohl Kippbewegungen der Spindelmutter (4) um ihre Längsachse, als auch Radialbewegungen quer zu ihrer Längsachse ermöglicht werden.

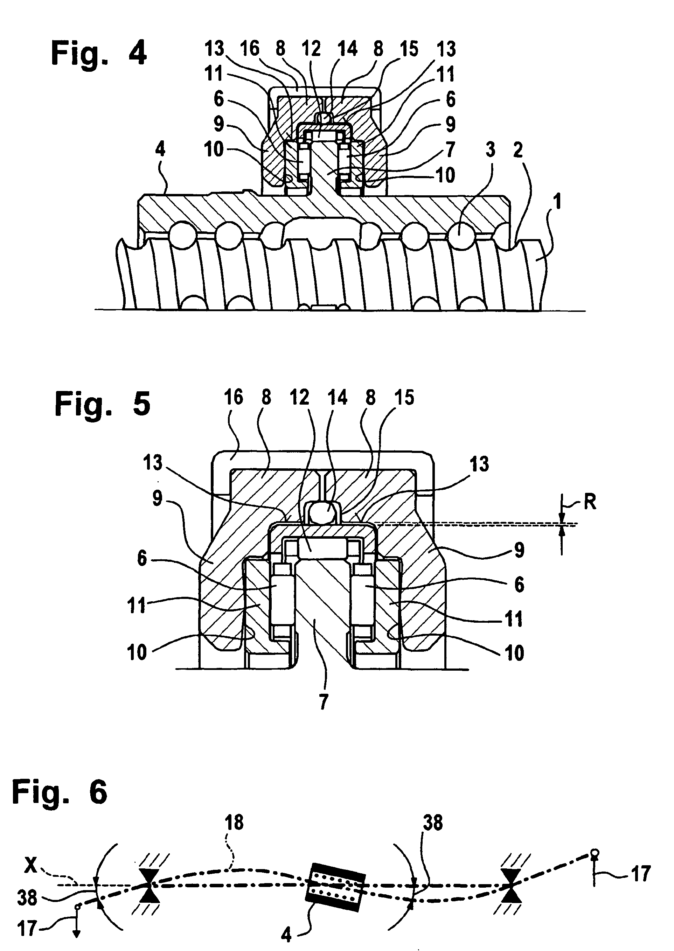

Die Lagerung (5) der Spindelmutter (4) ist in der Fig.4 und Fig.5 näher dargestellt. Die axiale Lagerung der Spindelmutter (4) erfolgt mittels zweier Axialwälzlager (6), die zwischen einem Radialflansch (7) und zwei quer zur Längsachse der Gewindespindel (1) geteilte Gehäusehälften (8) angeordnet sind. Diese Lagerung ist im wesentlichen spielfrei. Aber eine Kippbewegungen der Spindelmutter (4) um ihre Längsachse wird ermöglicht durch Borde (9) der Gehäusehälften (8), die an ihren einander zugewandten Stirnseiten hervorstehende, konvex geformte Anlagen (10) für Axiallagerringe (11) der Axialwälzlager (6) aufweisen. Die Borde (9) und ggf. der Radialflansch (7) sind elastisch auslenkbar und ermöglichen die Kippbewegung der Spindelmutter (4) durch Kippen der Axialwälzlager (6) bzw. der Axiallagerringe (11) im Bereich der elastischen Verformung. Entgegen einer koaxial steifen Verbindung zur Spindelstange (1) ist hiermit eine elastische Lagerung realisiert. Die radiale Lagerung der Spindelmutter (4) erfolgt mittels eines Radialwälzlagers (12), das in einem an den Gehäusehälften (8) ausgebildeten Lagersitz (13) angeordnet ist, wobei zwischen den Gehäusehälften (8) und dem Radialwälzlager (12) ein Radialspiel (R) vorgesehen ist. Zwischen den Gehäusehälften (8) und dem Radialwälzlager (12) ist ein Dämpfungselement (14) angeordnet, das zum einen dazu dient, ein Mitdrehen der Gehäusehälften (8) zu verhindern und so die Funktion des Lagers sicherzustellen und zum anderen zur Dämpfung von Radialbewegungen der Spindelmutter dient. Der Lagersitz (13) für das Radialwälzlager (12) ist hohlzylindrisch ausgebildet und weist eine umlaufende Nut (15) auf, in der Dämpfungselement (14) angeordnet ist. Das Dämpfungselement (14) ist vorzugsweise ein O-Ring aus einem gummielastischen Werkstoff und steht radial einwärts aus der Nut zumindest teilweise hervor.

Wie in der Fig.6 gezeigt, kann sich die Spindelstange (1) unter Belastung durch Radialkräfte (17) verformen und es entsteht je nach Lagerungs-Konzept des Wälzkörpergewindetriebs bzw. der Spindelmutter (4) eine entsprechende Biegelinie (18). Wäre die Spindelstange (1) durch eine biegesteife Lagerung der Spindelmutter (4) an einer gewissen Verkippung (38) um die ideelle Achse (X) behindern, so würden in den Lagern, bedingt durch die Lagerstellenlänge, in den Lagerstellen partiell sehr hohe Radialkräfte entstehen. Diese können einen schlechten mechanischen Wirkungsgrad verursachen bzw. zur Zerstörung einzelner Bauteile führen. Zudem würden in dem in der Fig.1 gezeigten Gewindespindeltrieb eine unsymmetrische Belastung der Kugellaufbahnen (2) entstehen und die Tragzahl und Lebensdauer des Gewindetriebs reduzieren. Durch die Biegelinie (18) "pendeln" die Axialwälzlager (6) und die Axiallagerringe (11) durch die gezielte elastische Verformbarkeit der Borde (9) und ggf. des Radialflansches (7) die unsymmetrische Belastung aus und die Spindelmutter (4) kann sich der Biegelinie (18) anpassen. Dabei wird durch die ballig bzw. konvex ausgeführten Anlagen (10) der Borde (9) die wirkende Axialkraft auch unter Verformung der Borde (9) und ggf. des Radialflansches (7) immer rechtwinklig und zentrisch durch die Axiallagerringe (11) auf die Axialwälzlager (6) übertragen. Dies vergleichmäßigt die Belastung der Wälzkörper (3), erhöht deren Tragfähigkeit, den Wirkungsgrad und insgesamt die Lebensdauer der Axialwälzlager (6). Das radiale Ausweichen von Spindelstange (1) und Spindelmutter (4) wird beim Überschreiten eines integrierten Spieles (R) durch das integrierte Radialwälzlager (12) abgefangen. Die Spindelstange wird in ihrem Zentrum bei erhöhten Kräften radial stabilisiert. Denn in einem bestimmten Bereich, abhängig vom Spiel (R), läuft das Radialwälzlager (12), durch den O-Ring (14) gehalten, unbelastet mit. Insgesamt ergeben sich durch das radial- und verdrehweiche Antriebs- und Lagerungskonzept vorteilhafte Verbesserungen des Gesamtwirkungsgrades und des Ansprechverhaltens des Spindelgewindetriebs. Um die Spielfreiheit des Wälzkörpergewindetrieb zu gewährleisten, wird der ganze Gewindetrieb in einem Ring (16) mit einer definierten Vorspannung der beiden Gehäusehälften (8) vormontiert und bildet somit eine später leicht zu integrierende Baugruppe. Die Vorspannung des Axialwälzlagers (6) wird vorzugsweise durch begrenztes axiales Verstemmen des Ringes (16) erzielt. Die Begrenzung der Verstemmung erfolgt durch Messen des Schleppmomentes der Spindelmutter (4). Es ist ebenso möglich, die Verbindung durch eine Schraubverbindung oder andere bekannte Verbindungsarten zu realisieren. Der Ring (16) wird an dem Kraftfahrzeug-Achslenkmodul ortsfest angebracht. Der Wälzkörpergewindetrieb ist dann eine Baugruppe einer Antriebseinrichtung mit einem Drehantrieb, der vorzugsweise über eine biegeweiche Drehmomentkupplung antriebsmäßig mit der Spindelmutter (4) verbunden ist. Die Gewindespindel (1) des Wälzkörpergewindetriebs ist durch die Spindelmutter (4) bewegbar, wodurch die in axialer Richtung dahinter angeordnete Zahnstange mitbewegt wird und ein Verschwenken von lenkbaren Fahrzeugrädern bewirkt.

## Patentansprüche

1. Wälzkörpergewindetrieb, der eine Spindelstange (1), eine diese zumindest teilweise umgebende Spindelmutter (4) und eine Anzahl dazwischen angeordneter Wälz- oder Rollkörpern (3) aufweist,
**dadurch gekennzeichnet, dass** für die Spindelmutter (4) eine axiale und radiale Lagerung vorgesehen ist, die sowohl für Kippbewegungen der Spindelmutter (4) um ihre Längsachse, als auch für Radialbewegungen der Spindelmutter (4) quer zu ihrer Längsachse ausgebildet ist.

2. Wälzkörpergewindetrieb nach Anspruch 1,
**dadurch gekennzeichnet, dass** mindestens ein Axialwälzlager (6) vorgesehen ist zur axialen Lagerung der Spindelmutter (4), die einen Radialflansch (7) aufweist, dessen Stirnseiten zur Anlage für das Axialwälzlager(6) ausgebildet sind.

3. Wälzkörpergewindetrieb nach Anspruch 1 oder 2,
**dadurch gekennzeichnet**, die axiale Lagerung an einem Gehäuse (8) vorgesehen ist, das an einander zugewandten Stirnseiten zur Anlage des Axialwälzlagers (6) ausgebildet ist.

4. Wälzkörpergewindetrieb nach Anspruch 3,
**dadurch gekennzeichnet, dass** das Gehäuse (8) zwei quer zur Drehachse der Spindelstange (1) geteilte Gehäusehälften (8) aufweist und je ein Axialwälzlager (6) zwischen dem Radialflansch (7) und jeder Gehäusehälfte (8) angeordnet ist.

5. Wälzkörpergewindetrieb nach Anspruch 4,
**dadurch gekennzeichnet, dass** die beiden Gehäusehälften (8) die Axialwälzlager (6) spielfrei aufnehmen.

6. Wälzkörpergewindetrieb nach einem der Ansprüche 3 bis 5,
**dadurch gekennzeichnet, dass** Borde (9) des Gehäuses (8) an ihren einander zugewandten Stirnseiten zur Anlage von Axiallagerringen (11) der Axialwälzlager (6) ausgebildet sind.

7. Wälzkörpergewindetrieb nach Anspruch 6,
**dadurch gekennzeichnet, dass** die einander zugewandten Stirnseiten der Borde (9) hervorstehende, konvex geformte Anlagen (10) für die Axiallagerringe (11) der Axialwälzlager (6) aufweisen.

8. Wälzkörpergewindetrieb nach Anspruch 6 oder 7,
**dadurch gekennzeichnet, dass** die Borde (9) elastisch auslenkbar sind.

9. Wälzkörpergewindetrieb nach einem der Ansprüche 1 bis 8,
**dadurch gekennzeichnet, dass** ein Radialwälzlager (12) vorgesehen ist zur radialen Lagerung der Spindelmutter (4).

10. Wälzkörpergewindetrieb nach Anspruch 9,
**dadurch gekennzeichnet, dass** für das Radialwälzlager (12) ein Lagersitz vorgesehen ist, der am Gehäuse (8) ausgebildet ist und zwischen dem und dem Radialwälzlager (12) ein Radialspiel (R) vorgesehen ist.

11. Wälzkörpergewindetrieb nach Anspruch 9 oder 10,
**dadurch gekennzeichnet, dass** zwischen dem Gehäuse (8) und dem Radialwälzlager (12) ein Dämpfungselement (14) zur Dämpfung von Radialbewegungen der Spindelmutter (4) angeordnet ist.

12. Wälzkörpergewindetrieb nach einem der Ansprüche 9 bis 11,
**dadurch gekennzeichnet, dass** der Lagersitz für das Radialwälzlager (12) hohlzylindrisch ausgebildet ist und eine umlaufende Nut (13) aufweist, in der ein gummielastisches, ringförmig geschlossenes Dämpfungselement (14) angeordnet ist, das radial einwärts aus der Nut (13) zumindest teilweise hervorsteht.

13. Wälzkörpergewindetrieb nach einem der Ansprüche 9 bis 12,
**dadurch gekennzeichnet, dass** die Wälz-oder Rollkörper (3) des Wälzkörpergewindetriebs kugelförmig ausgebildet sind.

14. Antriebseinrichtung eines Kraftfahrzeug-Achslenkmoduls mit einem Wälzkörpergewindetrieb gemäß Anspruch 1,
**dadurch gekennzeichnet, dass** die Antriebseinrichtung einen Drehantrieb aufweist, der über eine biegeweiche Drehmomentkupplung antriebsmäßig mit der Spindelmutter (4) verbunden ist.

15. Antriebseinrichtung nach Anspruch 14,
**dadurch gekennzeichnet, dass** die Spindelstange (1) des Wälzkörpergewindetrieb in axialer Richtung hinter einem beweglichen Bauelement des Kraftfahrzeug-Achslenkmoduls angeordnet ist, das mit einem von einem Fahrer betätigbaren Lenkrad verbunden oder verbindbar ist und durch Verlagerung ein Verschwenken von lenkbaren Fahrzeugrädern bewirkt.

16. Antriebseinrichtung nach Anspruch 15,
**dadurch gekennzeichnet, dass** das beweglichen Bauelement des Kraftfahrzeug-Achslenkmoduls eine Zahnstange ist, mit der die Spindelstange (1) fest verbunden ist.

## Claims

1. Threaded mechanism with rolling bodies comprising a spindle rod (1), a spindle nut (4) at least partially enclosing said spindle rod, and a number of interposed rolling bodies (3),
**characterized in that** there is provision of an axial and radial mounting support for the spindle nut (4) that is so designed as to allow both tilting movements of the spindle nut (4) about its longitudinal axis and radial movements of the spindle nut (4) transversely relative to its longitudinal axis.

2. Threaded mechanism with rolling bodies as claimed in claim 1,
**characterized in that** at least one axial roller bearing (6) is provided for the axial mounting support of the spindle nut (4) having a radial flange (7), the frontal ends of which are designed as an abutment for the axial roller bearing (6).

3. Threaded mechanism with rolling bodies as claimed in claim 1 or 2,
**characterized in that** the axial mounting support is provided on a housing (8) that is designed on facing frontal ends as an abutment for the axial roller bearing (6).

4. Threaded mechanism with rolling bodies as claimed in claim 3,
**characterized in that** the housing (8) includes two housing shells (8) divided transversely relative to the axis of rotation of the spindle rod (1), and each one axial roller bearing (6) is interposed between the radial flange (7) and each of the housing shells (8).

5. Threaded mechanism with rolling bodies as claimed in claim 4,
**characterized in that** the two housing shells (8) accommodate the axial roller bearings (6) in a clearance-free manner.

6. Threaded mechanism with rolling bodies as claimed in any one of claims 3 to 5,
**characterized in that** facing frontal ends of legs (9) of the housing (8) are configured as an abutment for axial bearing rings (11) of the axial roller bearings (6) .

7. Threaded mechanism with rolling bodies as claimed in claim 6,
**characterized in that** the facing frontal ends of the legs (9) include projecting, convexly shaped abutments (10) for the axial bearing rings (11) of the axial roller bearings (6).

8. Threaded mechanism with rolling bodies as claimed in claim 6 or 7,
**characterized in that** the legs (9) are elastically deflectable.

9. Threaded mechanism with rolling bodies as claimed in any one of claims 1 to 8,
**characterized in that** a radial roller bearing (12) is arranged for the radial mounting support of the spindle nut (4).

10. Threaded mechanism with rolling bodies as claimed in claim 9,
**characterized in that** a bearing seat being designed on the housing (8) is provided for the radial roller bearing (12), a radial clearance (R) being arranged between the bearing seat and the radial roller bearing (12).

11. Threaded mechanism with rolling bodies as claimed in claim 9 or 10,
**characterized in that** a damping element (14) for damping radial movements of the spindle nut (4) is arranged between the housing (8) and the radial roller bearing (12).

12. Threaded mechanism with rolling bodies as claimed in any one of claims 9 to 11,
**characterized in that** the bearing seat for the radial roller bearing (12) has a hollow-cylindrical design and includes a circumferential groove (13) housing a rubber-elastic, annularly closed damping element (14), which at least partly projects from the groove (13) in a radially inward direction.

13. Threaded mechanism with rolling bodies as claimed in any one of claims 9 to 12,
**characterized in that** the rolling bodies (3) of the threaded mechanism with rolling bodies have a spherical design.

14. Driving device of an automotive vehicle axle guide module with a threaded mechanism with rolling bodies as claimed in claim 1,
**characterized in that** the driving device includes a rotary drive that is connected to the spindle nut (4) in terms of driving by way of a flexible torque clutch.

15. Driving device as claimed in claim 14,
**characterized in that** the spindle rod (1) of the threaded mechanism with rolling bodies is arranged in an axial direction behind a movable component of the automotive vehicle axle guide module that is connected or connectable to a steering wheel operable by a driver and, by displacement, causes steerable vehicle wheels to turn.

16. Driving device as claimed in claim 15,
**characterized in that** the movable component of the automotive vehicle axle guide module is a toothed rack to which the spindle rod (1) is rigidly connected.

## Revendications

1. Mécanisme à vis et corps de roulement qui comporte une tige de broche (1), un écrou de broche (4) entourant au moins en partie celle-ci et un nombre de corps de roulement ou à rouleaux (3) disposé entre ceux-ci,
**caractérisé en ce que** pour l'écrou de broche (4) il est prévu un support axial et radial qui est réalisé aussi bien pour des mouvements de basculement de l'écrou de broche (4) autour de son axe longitudinal, que pour des mouvements radiaux de l'écrou de broche (4) transversalement à son axe longitudinal.

2. Mécanisme à vis et corps de roulement selon la revendication 1,
**caractérisé en ce qu'**il est prévu au moins un palier à roulement axial (6) pour le support axial de l'écrou de broche (4), qui comporte une bride radiale (7) dont les faces frontales sont conçues pour l'application du palier à roulement axial (6).

3. Mécanisme à vis et corps de roulement selon la revendication 1 ou 2,
**caractérisé en ce que** le support axial est prévu sur un boîtier (8) qui est réalisé sur des faces frontales tournées l'une vers l'autre pour l'application du palier à roulement axial (6).

4. Mécanisme à vis et corps de roulement selon la revendication 3,
**caractérisé en ce que** le boîtier (8) comporte deux moitiés de boîtier (8) divisées transversalement à l'axe de rotation de la tige de broche (1) et à chaque fois un palier à roulement axial (6) est disposé entre la bride radiale (7) et chaque moitié de boîtier (8).

5. Mécanisme à vis et corps de roulement selon la revendication 4,
**caractérisé en ce que** les deux moitiés de boîtier (8) reçoivent sans jeu les paliers à roulement axiaux (6).

6. Mécanisme à vis et corps de roulement selon l'une des revendications 3 à 5,
**caractérisé en ce que** des bords (9) du boîtier (8) sont réalisés sur leurs faces frontales tournées l'une vers l'autre, pour l'application de bagues de palier axial (11) des paliers à roulement axiaux (6).

7. Mécanisme à vis et corps de roulement selon la revendication 6,
**caractérisé en ce que** les faces frontales tournées l'une vers l'autre des bords (9) présentent des surfaces d'application (10) saillantes, de forme convexe, pour les bagues de palier axial (11) des paliers à roulement axiaux (6).

8. Mécanisme à vis et corps de roulement selon la revendication 6 ou 7,
**caractérisé en ce que** les bords (9) peuvent être déviés élastiquement.

9. Mécanisme à vis et corps de roulement selon l'une des revendications 1 à 8,
**caractérisé en ce qu'**il est prévu un palier à roulement radial (12) pour le support radial de l'écrou de broche (4).

10. Mécanisme à vis et corps de roulement selon la revendication 9,
**caractérisé en ce que** pour le palier à roulement radial (12) il est prévu un siège de palier qui est réalisé sur le boîtier (8) et un jeu radial (R) est prévu entre celui-ci et le palier à roulement radial (12).

11. Mécanisme à vis et corps de roulement selon la revendication 9 ou 10,
**caractérisé en ce qu'**un élément d'amortissement (14) est prévu entre le boîtier (8) et le palier à roulement radial (12) pour amortir des mouvements radiaux de l'écrou de broche (4).

12. Mécanisme à vis et corps de roulement selon l'une des revendications 9 à 11,
**caractérisé en ce que** le siège de palier pour le palier à roulement radial (12) est réalisé cylindrique creux et présente une rainure (13) périphérique dans laquelle est disposé un élément d'amortissement (14) fermé en anneau et présentant l'élasticité du caoutchouc, qui dépasse au moins en partie radialement vers l'intérieur de la rainure (13).

13. Mécanisme à vis et corps de roulement selon l'une des revendications 9 à 12,
**caractérisé en ce que** les corps de roulement ou à rouleaux (3) du mécanisme à vis et corps de roulement sont réalisés en forme sphérique.

14. Dispositif d'entraînement d'un module de guide d'essieu de véhicule automobile avec un mécanisme à vis et corps de roulement selon la revendication 1,
**caractérisé en ce que** le dispositif d'entraînement comporte un entraînement en rotation qui est relié en entraînement avec l'écrou de broche (4) par un accouplement de couple de rotation flexible.

15. Dispositif d'entraînement selon la revendication 14,
**caractérisé en ce que** la tige de broche (1) du mécanisme à vis et corps de roulement est disposée dans la direction axiale derrière un composant mobile du module de guide d'essieu de véhicule automobile, qui est relié ou peut être relié à un volant à actionner par un conducteur, et provoque un pivotement des roues directrices du véhicule, par déplacement.

16. Dispositif d'entraînement selon la revendication 15,
**caractérisé en ce que** le composant mobile du module de guide d'essieu de véhicule automobile est une crémaillère solidaire de la tige de broche (1).
